# EUROPEAN PATENT APPLICATION

(11) **EP 4 765 228 A1**
(43) Date of publication of application: **24.06.2026**
(21) Application number: 25845075.8
(22) Date of filing: 15.07.2025
(51) Int. Cl.: H01M 4/131, H01M 4/62, H01M 10/0562, H01M 4/525, H01M 4/505, H01M 4/02

(54) **POSITIVE ELECTRODE FOR ALL-SOLID-STATE BATTERY AND ALL-SOLID-STATE BATTERY COMPRISING SAME**

(30) Priority: 26.07.2024 KR 20240099100
(71) Applicant: LG Energy Solution, Ltd., Seoul 07335 (KR)
(72) Inventor: CHOI, Seokin, Daejeon 34122 (KR); KWON, Hyejin, Daejeon 34122 (KR); LEE, Choonghyeon, Daejeon 34122 (KR); KIM, Myeongsoo, Daejeon 34122 (KR); OH, Kyungbae, Daejeon 34122 (KR); PARK, Mihui, Daejeon 34122 (KR); KANG, Sora, Daejeon 34122 (KR); LEE, Junho, Daejeon 34122 (KR)
(74) Representative: Goddar, Heinz J.
(86) International application number: PCT/KR2025/010366
(87) International publication number: WO 2026/023979

(57) **Abstract**

The present disclosure relates to a positive electrode for an all-solid-state battery and an all-solid-state battery including the same.

## Description

### [Technical Field]

This application claims the benefit of priority based on Korean Patent Application No. 10-2024-0099100, filed on July 26, 2024, the disclosures of which are incorporated herein by reference in their entirety.

The present disclosure relates to a positive electrode for an all-solid-state battery and an all-solid-state battery comprising same.

### [Background Art]

Lithium secondary batteries are widely used as a power source for portable devices, including IT mobile devices, and the market has recently grown from small lithium secondary batteries to medium or large secondary batteries. Particularly, the use of batteries for automobiles is rapidly increasing. To be used as a power source for an electric vehicle, a lithium secondary battery requires high energy density and high power characteristics, and it is considered especially important to secure safety.

Conventional lithium secondary batteries use liquid, non-aqueous organic electrolytes, which have the risk of ignition and explosion. Since there are continuous explosion accidents of products applied with this technology, it is urgent to resolve this problem.

An all-solid-state battery refers to a battery in which the liquid organic electrolyte is replaced with a solid one, and all components of the battery including the electrode and the electrolyte are solids. Due to the high safety of the solid electrolyte therein, the risk of ignition or explosion can be fundamentally eliminated.

As a solid electrolyte of an all-solid-state lithium secondary battery, a gel-type polymer electrolyte, a sulfide-based solid electrolyte, or oxide-based solid electrolyte can be used. Among them, a sulfide-based solid electrolyte has a high lithium ion conductivity of more than 1×10⁻² S/cm, and a wide potential window of more than 5V, which causes less deterioration of characteristics even in extreme environments, and has a great advantage in designing a lithium ion secondary battery having high energy density.

Because an all-solid-state battery uses a solid electrolyte, a positive electrode active material layer of the all-solid-state battery is required to include a solid electrolyte for lithium ion conduction pathways. Therefore, the positive electrode active material layer in the all-solid-state battery is required to include a positive electrode active material, a binder, and a solid electrolyte. In order to reduce the porosity of the positive electrode in the all-solid-state battery, improve the ion conductivity and the electrical conductivity, and enhance the energy density of the all-solid-state battery, it is necessary to improve the structure of the solid electrolyte included in the positive electrode active material layer; thus, research addressing these aspects is needed.

### [Prior Art Reference]

### [Patent Reference]

(Patent Reference 1) Korean Patent No. 10-2228383

### [Detailed Description of the Invention]

### [Technical Problem]

It is an object of the present disclosure to provide a positive electrode for an all-solid-state battery capable of reducing the porosity of the positive electrode and improving ion conductivity and electrical conductivity.

It is an object of the present disclosure to provide an all-solid-state battery having excellent energy density by including the positive electrode.

### [Technical Solution]

In order to achieve above objectives, the present disclosure provides a positive electrode for an all-solid-state battery, comprising a current collector; and a positive electrode active material layer disposed on the current collector, wherein the positive electrode active material layer comprises a positive electrode active material, a binder, and a solid electrolyte represented by Formula 1:

[Formula 1] LiₐP_{b}S_{c}Cl_{d}Xₑ

wherein, 4≤a≤7, 0≤b≤1, 3≤z≤5, 0≤d<0.3, d<e≤3, and X is Br or I.

Furthermore, the present disclosure provides an all-solid-state battery comprising the above positive electrode of the present disclosure; a negative electrode; and a solid electrolyte layer disposed between the positive electrode and the negative electrode.

### [Advantageous Effects]

The positive electrode for an all-solid-state battery of the present disclosure includes a solid electrolyte including an excess amount of bromine or iodine, thereby reducing the porosity of the positive electrode and improving the ion conductivity and electrical conductivity of the positive electrode.

Furthermore, the all-solid-state battery including the positive electrode of the present disclosure can exhibit excellent energy density.

### [Brief Description of Drawing]

FIG. 1 is a result of measuring the porosity of the positive electrode in Experimental Example 1.
FIG. 2 is a result of measuring the discharge capacity of the positive electrode in Experimental Example 3.
FIG. 3 is a result of measuring the life cycle characteristics of the positive electrode in Experimental Example 3.

### [Best Mode]

The terms or words used in this specification and the claims should not be interpreted in a typical or dictionary sense only but should be interpreted in a sense and concept consistent with the technical idea of the invention, based on the principle that the inventor can appropriately define the concept of the terms to best explain his or her own invention.

The terms used in the present disclosure are only for the purpose of describing particular embodiments and are not intended to limit the present disclosure. Singular expressions shall include plural expressions unless the context clearly indicates otherwise. As used in the present disclosure, the terms such as "comprise" or "have" are intended to specify the presence of stated features, numerals, steps, operations, components, parts or combinations thereof, but do not preclude the possibility of the presence or addition of one or more other features, numerals, steps, operations, components, parts or combinations thereof.

Hereinafter, the present disclosure will be described in more detail.

An all-solid-state battery uses a solid electrolyte instead of a liquid electrolyte, and the positive electrode active material layer includes a solid electrolyte in order to secure a lithium ion conduction pathway. In the present disclosure, by improving the solid electrolyte included in the positive electrode active material layer, it is intended to provide a positive electrode for an all-solid-state battery having low porosity and improved ion conductivity and electrical conductivity.

### Positive Electrode for All-solid-state Battery

The present disclosure relates to a positive electrode for an all-solid-state battery, comprising a current collector; and a positive electrode active material layer disposed on the current collector, wherein the positive electrode active material layer includes a positive electrode active material, a binder, and a solid electrolyte represented by Formula 1:

[Formula 1] LiₐP_{b}S_{c}Cl_{d}Xₑ

wherein, 4≤a≤7, 0≤b≤1, 3≤z≤5, 0≤d<0.3, d<e≤3, and X is Br or I.

Accordingly, the solid electrolyte of Formula 1 may be LiₐP_{b}S_{c}Cl_{d}Brₑ or LiₐP_{b}S_{c}Cl_{d}Iₑ.

In Formula 1, 0≤d<0.3, and preferably 0<d<0.3.

Furthermore, in Formula 1, d<e≤3, and e may be e≥7d. When e≥7d, d is not zero. Since d<e≤3 and e≥7d in Formula 1, X may be included in an excess amount in Formula 1. When X is included in an excess amount in Formula 1, the contact area between the solid electrolyte of Formula 1 and the positive electrode active material can be increased, thus improving the ion conductivity and electrical conductivity of the positive electrode. Therefore, the all-solid-state battery including the positive electrode can achieve enhanced energy density.

Accordingly, low porosity of the positive electrode for an all-solid-state battery can be ensured, and ion conductivity and electrical conductivity can be improved. If e≤d or e<7d, X is not included in an excess amount, so the above effects cannot be obtained. Furthermore, preferably e is 0.5≤e≤3, and most preferably, e is 0.5≤e≤1.5.

The solid electrolyte of Formula 1 may be included in an amount of 3 to 30 wt% based on the total weight of the positive electrode active material layer. Specifically, the content of the solid electrolyte of Formula 1 may be 3 wt% or more, 5 wt% or more, 7 wt% or more, or 10 wt% or more, and may be 30 wt% or less, 25 wt% or less, 20 wt% or less, or 10 wt% or less. If the content of the solid electrolyte of Formula 1 is less than 3 wt%, the effect of improving ion conductivity and electrical conductivity of the positive electrode may be insignificant. If it exceeds 30 wt%, the content of the positive electrode active material and binder is relatively decreased, lowering the performance of the battery.

The positive electrode active material may vary depending on the type of all-solid-state battery. For example, the positive electrode active material may include a layered compound such as lithium cobalt oxide (LiCoO₂), lithium nickel oxide (LiNiO₂), or a compound substituted with one or more transition metals; a lithium manganese oxide such as Li₁₊ₓMn₂₋ₓO₄ (0≤x≤0.33), LiMnO₃, LiMn₂O₃, or LiMnO₂; a lithium copper oxide (Li₂CuO₂); a vanadium oxide such as LiV₃O₈, V₂O₅, or Cu₂V₂O₇; a lithium nickel oxide of the Ni site type represented by formula LiNi₁₋ₓMₓO₂ (M = Co, Mn, Al, Cu, Fe, Mg, B or Ga; 0.01≤x≤0.3); a lithium manganese composite oxide represented by LiMn₂₋ₓMₓO₂ (M = Co, Ni, Fe, Cr, Zn or Ta; 0.01≤x≤0.1) or Li₂Mn₃MO₈ (M = Fe, Co, Ni, Cu or Zn); a spinel-structured lithium manganese composite oxide represented by LiNiₓMn₂₋ₓO₄; LiCoPO₄; LiFePO₄; elemental sulfur (S₈); a sulfur-based compound such as Li₂Sn (n≥1), organosulfur compounds, or carbon-sulfur polymers ((C₂Sₓ)ₙ: x=2.5 to 50, n=2), but are not limited thereto.

The positive electrode active material may be included in an amount of 65 to 95 wt% based on the total weight of the positive electrode active material layer. Specifically, the content of the positive electrode active material may be 65 wt% or more, 70 wt% or more, 75 wt% or more, or 80 wt% or more. It may be 95 wt% or less, 90 wt% or less, or 85 wt% or less. If the content of the positive electrode active material is less than 65 wt%, the battery performance may be reduced, and if it exceeds 95 wt%, the mass transport resistance may be increased.

The binder serves to enhance the binding force between the components constituting the positive electrode active material layer and between those components and the current collector, and any binder known in the art may be used.

For example, the binder may be a fluororesin-based binder comprising polyvinylidene fluoride (PVdF) or polytetrafluoroethylene (PTFE); a rubber-based binder comprising styrene butadiene rubber (SBR), acrylonitrile-butadiene rubber, or styrene-isoprene rubber; a cellulose-based binder comprising carboxyl methyl cellulose (CMC), starch, hydroxypropyl cellulose, or regenerated cellulose; a polyalcohol-based binder; a polyolefin-based binder comprising polyethylene or polypropylene; a polyimide-based binder; a polyester-based binder; and a silane-based binder. One type, a mixture of two or more types, or a copolymer selected from these groups may be used.

Furthermore, the binder may be included in an amount of 0.1 to 5 wt% based on the total weight of the positive electrode active material layer. Specifically, the content of the binder may be 0.1 wt% or more, 0.5 wt% or more, or 0.8 wt% or more, and may be 5 wt% or less, 4 wt% or less, 3 wt% or less, 2 wt% or less, or 1.5 wt% or less. If the content of the binder is less than 0.1 wt%, the enhancement of binding force between the materials included in the positive electrode active material layer may be insignificant, which can result in poor formation of the electrode sheet. If it exceeds 5 wt%, the ion conductivity or electrical conductivity of the positive electrode may be deteriorated.

The positive electrode active material layer may further include a conductive material. The conductive material is not particularly limited as long as it has excellent electrical conductivity without causing side reactions or chemical changes within the internal environment of the all-solid-state battery.

For example, the conductive material may be graphite or conductive carbon, such as natural graphite or artificial graphite; carbon blacks such as acetylene black, Ketjen black, denka black, thermal black, channel black, furnace black, or lamp black; carbonaceous substances with a crystalline structure of graphene or graphite; conductive fibers such as carbon fibers or metal fibers; fluorinated carbon; metal powders such as aluminum powder or nickel powder; conductive whiskers such as zinc oxide whisker or potassium titanate whisker; conductive metal oxides such as titanium oxide; and conductive polymers such as polyphenylene derivatives. These may be used alone or as a mixture of two or more, but they are not necessarily limited thereto. Preferably, the conductive material may comprise vapor-grown carbon fiber (VGCF).

The conductive material may be included in an amount of greater than 0 wt% and less than or equal to 5 wt% based on the total weight of the positive electrode active material layer. Specifically, the content of the conductive material may be 0.1 wt% or more, 0.5 wt% or more, 1 wt% or more, 1.5 wt% or more, or 2 wt% or more, and may be 5 wt% or less, 4 wt% or less, or 3 wt% or less. If the conductive material is not included, it may be difficult to expect an improvement in electrical conductivity, or the electrochemical properties of the battery may deteriorate. If the content exceeds 5 wt%, the amount of the positive electrode active material may become relatively smaller, thereby reducing capacity and energy density.

In one embodiment of the present disclosure, the positive electrode active material layer may be formed by applying a composition for forming a positive electrode active material layer, which includes a positive electrode active material, the solid electrolyte of Formula 1, and a binder, onto a current collector, wherein the composition may not contain a solvent. Therefore, the positive electrode for an all-solid-state battery of the present disclosure may be a dry positive electrode.

In another embodiment of the present disclosure, the positive electrode active material layer may be formed by applying and drying a composition for forming a positive electrode active material layer, which includes a positive electrode active material, the solid electrolyte of Formula 1, a binder, and a solvent, onto a current collector. Thus, the positive electrode for an all-solid-state battery of the present disclosure may be a wet positive electrode.

The positive electrode current collector is intended for the support of the positive electrode active material layer and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The porosity of the positive electrode may be from 0.1 to 40%. As described above, because the positive electrode active material layer includes the solid electrolyte of Formula 1, the contact area between the positive electrode active material and the solid electrolyte of Formula 1 can be increased, resulting in the above range of porosity. Therefore, the positive electrode of the present disclosure may have an effectively formed ion conduction pathway.

Furthermore, the ion conductivity of the positive electrode may be from 1×10⁻⁶ to 1×10⁻³ mS/cm at 60°C, and the electrical conductivity may be from 1×10⁻⁶ to 1×10⁻³ mS/cm. As described above, since the positive electrode active material layer includes the solid electrolyte of Formula 1, the contact area between the positive electrode active material and the solid electrolyte can be increased. Accordingly, the positive electrode of the present disclosure can have excellent ion conductivity and electrical conductivity as described above.

### All-solid-state Battery

The present disclosure relates to an all-solid-state battery comprising a positive electrode, a negative electrode, and a solid electrolyte layer interposed between the positive electrode and the negative electrode, wherein the positive electrode is the positive electrode of the present disclosure as described above.

The negative electrode may comprise a negative electrode current collector and a negative electrode active material located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions (Li⁺), and any material that can react with lithium ions to reversibly form lithium-containing compounds.

For example, the negative electrode active material may include at least one carbon-based material selected from the group consisting of crystalline artificial graphite, crystalline natural graphite, amorphous hard carbon, low crystalline soft carbon, carbon black, acetylene black, Ketjen black, Super P, graphene, and fibrous carbon, Si-based material, LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, group 1, group 2, group 3 elements of the periodic table, halogen; metal composite oxide such as 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni-based material; titanium oxide; lithium titanium oxide, and the like, but is not limited thereto.

Further, the negative electrode may include a negative electrode current collector and a coating layer comprising metal-carbon composite particles located on the negative electrode current collector. This may indicate an anodeless, meaning that it does not contain any negative electrode active material.

The negative electrode may be such that when the all-solid-state battery is charged, lithium ions pass through the coating layer to reach the surface of the negative electrode current collector, and are electrodeposited to form a lithium metal layer.

The metal-carbon composite particles may have carbon particles and metal particles attached to each other or coated on the surface with the other, and may be physically or chemically bonded.

The carbon particles may include natural graphite, artificial graphite, hard carbon, soft carbon, carbon black, acetylene black, Ketjen black, channel black, furnace black, lamp black, thermal black, carbon nanotubes, fullerene, carbon fiber, and carbon fluoride.

The metal particles are lithiophilic metals, for example, Ni, Cu, Ag, Au, Pt, Al, Zn, or Bi, and may be one or a combination of two or more thereof. By introducing a metal having the above lithiophilic properties, it is advantageous to form a stable and uniform lithium layer on the surface of the current collector.

The negative electrode may be prepared by mixing a binder solution and the composite particles to prepare a slurry for forming a coating layer, and then applying and drying the slurry onto a negative electrode current collector. In this case, the binder may be a conventional binder used in the art.

The solid electrolyte layer is formed as a layer comprising a solid electrolyte, and the solid electrolyte may be the solid electrolyte of Formula 1 as described above, or may be a solid electrolyte different from that of Formula 1. The solid electrolyte different from that of Formula 1 may include at least one selected from the group consisting of sulfide-based solid electrolytes, polymer-based solid electrolytes, and oxide-based solid electrolytes, and preferably may include a sulfide-based solid electrolyte.

The sulfide-based solid electrolyte contains sulfur (S) and exhibits ionic conductivity of a metal belonging to Group I or Group II of the periodic table, and may include Li-P-S-based glass or Li-P-S-based glass ceramics.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₃, Li₂S-Li₃PO₄-P₂S₅, Li₂S-P₂S₃, Li₂S-P₂S₃-SiS₂, Li₂S-P₂S₅-SnS, Li₂S-P₂S₂-Al₂S₃, Li₂S-GeS₂, and Li₂S-GeS₂-ZnS. Preferably, it may include at least one selected from the group consisting of Li₆PS₅Cl, Li₆PS₅Br, and Li₆PS₅I. The Li₆PS₅Cl, Li₆PS₅Br, and Li₆PS₅I may be Argyrodite-type solid electrolytes. Furthermore, the sulfide-based solid electrolyte may be in a form doped with trace elements; for example, Li₆PS₅Cl may be doped with additional bromine (Br).

The polymer-based solid electrolyte is a composite of a lithium salt and a polymer resin, i.e., a polymer electrolyte material formed by adding a polymer resin to a solvated lithium salt, and may exhibit ionic conductivity of about 1×10⁻⁷ S/cm or above, and preferably about 1×10⁻⁵ S/cm or above.

Non-limiting examples of the polymer resin may include at least one of polyether-based polymer, polycarbonate-based polymer, acrylate-based polymer, polysiloxane-based polymer, phosphazene-based polymer, polyethylene derivatives, alkylene oxide derivatives such as polyethylene oxide, phosphate ester polymers, polyagitation lysine, polyester sulfide, polyvinyl alcohol, polyvinylidene fluoride, and polymers including an ionic dissociable groups. Furthermore, the polymer resin may include, for example, a comb-like polymer resin, a crosslinked polymer resin and a branched copolymer obtained by copolymerization of a comonomer of amorphous polymer such as PMMA, polycarbonate, polysiloxane (pdms) and/or phosphazene in the main chain of polyethylene oxide (PEO), and the polymer electrolyte may include at least one of them as the polymer resin.

In the polymer solid electrolyte, the above-described lithium salt is an ionizable lithium salt, which can be represented by Li⁺X⁻. The anion of such a lithium salt is not particularly limited but may be, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, or (CF₃CF₂SO₂)₂N⁻.

The oxide-based solid electrolyte may include oxygen (O) and exhibit ionic conductivity of a metal belonging to Group I or Group II of the periodic table. For example, the oxide-based solid electrolyte may include at least one selected from the group consisting of LLTO-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_y(PO₄)₃-y (0≤x≤1, 0≤y≤1), LiAlₓZr₂₋ₓ(PO₄)₃ (where 0≤x≤1, 0≤y≤1), LiTiₓZr₂₋ₓ(PO₄)₃ (0≤x≤1, 0≤y≤1), LISICON-based compounds, LIPON-based compounds, perovskite-based compounds, NASICON-based compounds, and LLZO-based compounds.

The positive electrode active material layer of the positive electrode for an all-solid-state battery of the present disclosure includes the solid electrolyte of Formula 1. The solid electrolyte of Formula 1 is provided such that 0≤d<0.3, d<e≤3, and e≥7d, in which Cl is included in a trace amount and X (Br or I) is included in an excess amount. Therefore, the contact area between the solid electrolyte of Formula 1 and the positive electrode active material is increased, thereby reducing the porosity of the positive electrode and effectively forming an ion conduction pathway, which can improve the ion conductivity and electrical conductivity of the positive electrode. Accordingly, the all-solid-state battery including the positive electrode can achieve improved energy density.

### [Mode for Practicing the Invention]

Hereinafter, the present disclosure will be described in more detail by way of Examples, but these Examples are provided merely for illustrative purposes and are not intended to limit the scope of the present disclosure.

### <Preparation of Positive Electrode for All-solid-state Battery>

### Example 1

A composition for forming a positive electrode active material layer was prepared, comprising a positive electrode active material (NCM 811), a conductive material (carbon fiber), a solid electrolyte (Li₆PS₅Cl_{0.1}Br_{0.9}), and a binder (polytetrafluoroethylene). The composition for forming the positive electrode active material layer was applied to a positive electrode current collector to produce a positive electrode in which a positive electrode active material layer was formed on the current collector.

### Comparative Example 1

A positive electrode was produced in the same manner as in Example 1, except that Li₆PS₅Cl was used as the solid electrolyte.

### Comparative Example 2

A positive electrode was produced in the same manner as in Example 1, except that Li₆PS₅Cl_{0.5}Br_{0.5} was used as the solid electrolyte.

### Experimental Example 1. Measurement of Porosity of Positive Electrode for All-solid-state Battery

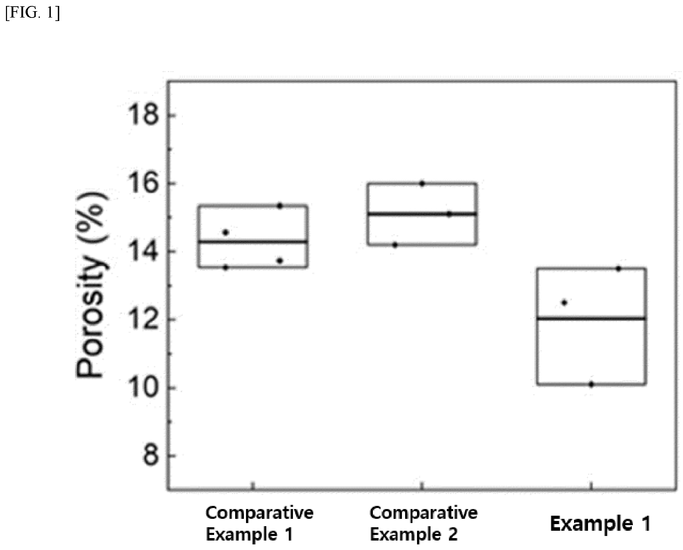

The porosity of the positive electrodes for an all-solid-state battery prepared in Example 1, Comparative Example 1, and Comparative Example 2 was measured. The porosity was measured by punching out each of the positive electrodes into a 2 × 2 cm² sample, then measuring the weight and thickness, and the results are illustrated in FIG. 1.

According to the results of the porosity measurement, the porosity of Example 1 was measured to be 12.1%, whereas the porosity of Comparative Example 1 was 14.3%, and the porosity of Comparative Example 2 was 15.1%. That is, the porosity of the positive electrode for an all-solid-state battery in Example 1 was lower than that of Comparative Examples 1 and 2.

The solid electrolyte in the positive electrode active material layer of Comparative Example 1 did not include X, and in Comparative Example 2, d was 0.5 and e was 0.5. Therefore, the positive electrode active material layers in Comparative Examples 1 and 2 did not include the solid electrolyte of Formula 1. Accordingly, since the contact between the positive electrode active material and the solid electrolyte did not increase, the positive electrodes for all-solid-state batteries in Comparative Examples 1 and 2 exhibited higher porosity compared to Example 1. On the other hand, since the positive electrode active material layer of Example 1 included the solid electrolyte of Formula 1, the contact between the positive electrode active material and the solid electrolyte increased, resulting in lower porosity.

### Experimental Example 2. Measurement of Ion Conductivity and Electrical Conductivity of Positive Electrode for All-solid-state Battery

The ion conductivity and electrical conductivity of the positive electrodes for all-solid-state batteries prepared in Example 1, Comparative Example 1, and Comparative Example 2 were measured. The ion conductivity and electrical conductivity were measured by Electrochemical Impedance Spectroscopy (60°C, 0.01-10⁶ Hz), and the results are illustrated in Table 1 below.

**Table 1**

| | **Example 1** | **Comparative Example 1** | **Comparative Example 2** |
|---|---|---|---|
| Electrical Conductivity (mS/cm) | 3.0X10⁻⁴ | 2.7X10⁻⁴ | 1.6X10⁻⁴ |
| Ionic Conductivity (mS/cm) | 1.7X10⁻⁴ | 1.4X10⁻⁴ | 4.8X10⁻⁵ |

According to the results illustrated in Table 1, the electrical conductivity and ionic conductivity of the positive electrode for an all-solid-state battery of Example 1 were superior to those of Comparative Examples 1 and 2. As described above in Experimental Example 1, the positive electrode active material layers of Comparative Examples 1 and 2 did not include the solid electrolyte of Formula 1. Accordingly, the contact between the positive electrode active material and the solid electrolyte was not increased, resulting in lower electrical conductivity and ionic conductivity for the positive electrodes of Comparative Examples 1 and 2 as compared to Example 1.

Since the positive electrode active material layer of Example 1 included the solid electrolyte of Formula 1, the contact between the positive electrode active material and the solid electrolyte was increased, exhibiting excellent electrical conductivity and ionic conductivity.

### Experimental Example 3. Measurement of Discharge Capacity and Cycle Characteristics of Positive Electrode for All-solid-state Battery

The discharge capacity and cycle characteristics of the positive electrodes for an all-solid-state battery prepared in Example 1, Comparative Example 1, and Comparative Example 2 were measured.

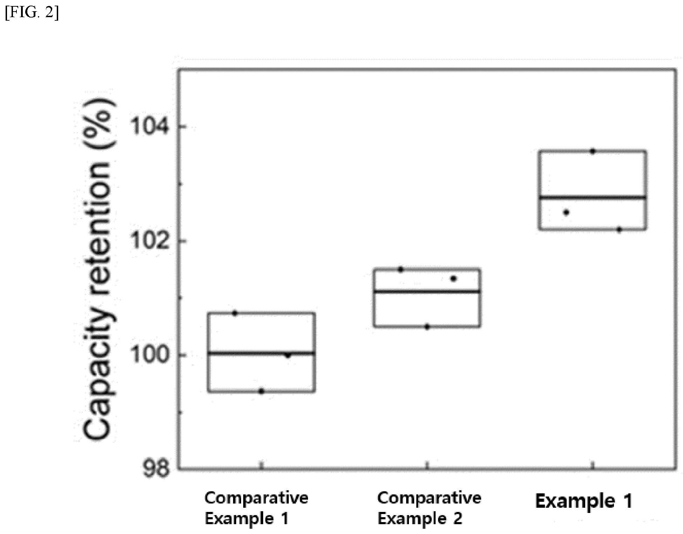

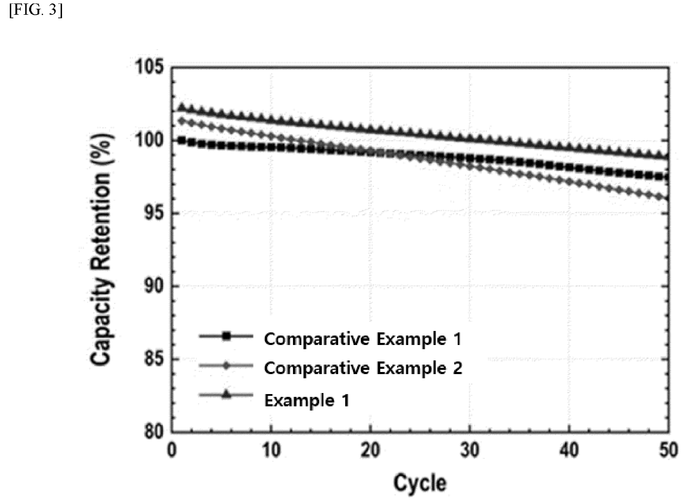

The measurement of discharge capacity and cycle characteristics was conducted as follows: Each positive electrode for an all-solid-state battery was charged at 0.33C in CCCV mode up to 4.25 V at a temperature of 60°C, and then discharged at a constant current to 3.0 V. The capacity retention rate after 50 charge/discharge cycles was used as the indicator. The discharge capacity results are illustrated in FIG. 2, and the cycle characteristics results are illustrated in FIG. 3.

As previously described in Experimental Example 1, the positive electrode active material layers of Comparative Examples 1 and 2 do not include the solid electrolyte of Formula 1. Therefore, according to the results of Experimental Examples 1 and 2, the positive electrodes for an all-solid-state battery of Comparative Examples 1 and 2 exhibited high porosity and low electrical and ionic conductivity, whereas the positive electrode active material layer of Example 1, which contains the solid electrolyte of Formula 1, exhibited lower porosity and superior electrical and ionic conductivity.

Accordingly, the positive electrode for an all-solid-state battery of Example 1, which has low porosity and high electrical and ionic conductivity, exhibited excellent results in terms of discharge capacity and cycle characteristics. In contrast, the positive electrodes for an all-solid-state battery of Comparative Examples 1 and 2, which have high porosity and low electrical and ionic conductivity, showed inferior discharge capacity and cycle characteristics compared to those of Example 1.

From these results, it can be seen that when the positive electrode active material layer includes the solid electrolyte of Formula 1, the contact between the positive electrode active material and the solid electrolyte of Formula 1 increases, which reduces the porosity of the positive electrode and improves its ionic and electrical conductivity. Furthermore, these effects improve the energy density of the positive electrode and the all-solid-state battery including the same.

## Claims

1. A positive electrode for an all-solid-state battery, comprising:
a current collector; and
a positive electrode active material layer disposed on the current collector,
wherein the positive electrode active material layer comprises a positive electrode active material, a binder, and a solid electrolyte represented by Formula 1:
[Formula 1] LiₐP_{b}S_{c}Cl_{d}Xₑ
wherein, 4≤a≤7, 0≤b≤1, 3≤z≤5, 0≤d<0.3, d<e≤3, and X is Br or I.

2. The positive electrode for an all-solid-state battery according to claim 1, wherein 0<d<0.3.

3. The positive electrode for an all-solid-state battery according to claim 2, wherein e≥7d.

4. The positive electrode for an all-solid-state battery according to claim 1, wherein 0.5≤e≤3.

5. The positive electrode for an all-solid-state battery according to claim 1, wherein the positive electrode active material layer comprises 65 wt% to 95 wt% of the positive electrode active material, 3 wt% to 30 wt% of the solid electrolyte of Formula 1, and 0.1 wt% to 5 wt% of the binder, based on a total weight of the positive electrode active material layer.

6. The positive electrode for an all-solid-state battery according to claim 1, wherein the positive electrode active material layer further includes a conductive material.

7. The positive electrode for an all-solid-state battery according to claim 6, wherein the conductive material is included in an amount of more than 0 wt% to 5 wt% based on a total weight of the positive electrode active material layer.

8. An all-solid-state battery, comprising:
a positive electrode according to any one of claims 1 to 7;
a negative electrode; and
a solid electrolyte layer disposed between the positive electrode and the negative electrode.

9. The all-solid-state battery according to claim 8, wherein the solid electrolyte of the solid electrolyte layer comprises a sulfide-based solid electrolyte.

10. The all-solid-state battery according to claim 9, wherein the solid electrolyte is the same as or different from the solid electrolyte of Formula 1.
